# EUROPÄISCHE PATENTSCHRIFT

(11) **EP 3 558 732 B1**
(45) Veröffentlichungstag und Bekanntmachung des Hinweises auf die Patenterteilung: **15.06.2022**
(21) Anmeldenummer: 17804495.4
(22) Anmeldetag: 15.11.2017
(51) Int. Cl.: B60J 7/02, B60J 1/20

(54) **FAHRZEUGDACH MIT TRÄGERABSCHNITT UND ROLLOANORDNUNG**
VEHICLE ROOF WITH CARRIER SECTION AND ROLLER BLIND ARRANGEMENT
TOIT DE VÉHICULE AVEC SECTION DE SUPPORT ET ARRANGEMENT DE ROLLO

(30) Priorität: 21.12.2016 DE 102016125284
(43) Veröffentlichungstag der Anmeldung: 30.10.2019
(73) Patentinhaber: Webasto SE, 82131 Stockdorf (DE)
(72) Erfinder: MÜLLER, Mathias, 82131 Stockdorf (DE); TIRPITZ, Günter, 82131 Stockdorf (DE)
(74) Vertreter: advotec.
(86) Internationale Anmeldenummer: PCT/EP2017/079285
(87) Internationale Veröffentlichungsnummer: WO 2018/114147

(56) Entgegenhaltungen:
- EP-A1- 0 315 516
- EP-A1- 2 327 576
- EP-A1- 2 623 347
- DE-A1- 19 746 543
- DE-A1-102004 020 337

## Beschreibung

Die Erfindung betrifft ein Fahrzeugdach mit den Merkmalen des Oberbegriffs des Patentanspruchs 1.

Aus der Praxis ist ein Fahrzeugdach bekannt, das mindestens einen, vorzugsweise zwei transparente Dachabschnitte umfasst, von denen beispielsweise einer von einem Glasdeckelelement einer Schiebedachanordnung gebildet ist. Die transparenten Dachabschnitte sind mittels einer Rolloanordnung wahlweise abschattbar oder zumindest teilweise freigebbar. Die Rolloanordnung umfasst hierzu für jeden transparenten Dachabschnitt eine Rolloeinheit, die eine Rollobahn aufweist, welche auf einer Wickelwelle, die an einem Rand des betreffenden transparenten Dachabschnitts angeordnet ist, zu einem Rollowickel aufwickelbar ist oder zum Abschatten des betreffenden transparenten Dachabschnitts von der Wickelwelle abwickelbar ist. Bezogen auf eine vertikale Dachlängsmittelebene ist diese Rollobahn beidseits jeweils mit einem Führungsband versehen, das in einer an dem jeweiligen Rand des betreffenden, transparenten Dachabschnitts angeordneten, dachfesten Führungsschiene geführt ist. Damit kann die Rollobahn in ihren von der Wickelwelle abgewickelten Bereichen in Fahrzeugquerrichtung straff gehalten werden.

Bei bisher bekannten Fahrzeugdächern der vorstehend beschriebenen Art ist die Rolloanordnung an einem Dach komplett vormontiert, bevor dieses mit einem Fahrzeugrohbau verbunden wird. Da der erforderliche Bauraum nicht mehr zugänglich ist, kann die Rolloanordnung nicht nach der Montage des Daches an dem Fahrzeugrohbau montiert werden. Zudem erfordert die Montage bisheriger Rolloanordnungen der oben beschriebenen Art eine hohe Arbeitsgenauigkeit bei der Anbindung von Stoffzentrierungen an die Führungsschienen. Der Prozess ist nicht automatisierbar.

Ein Fahrzeugdach mit den Merkmalen des Oberbegriffs des Patentanspruchs 1 ist aus der Druckschrift DE 10 2004 020 337 A1 bekannt und umfasst einen transparenten Dachabschnitt, der von einer Scheibe gebildet ist, die auf einen Dachrahmen aufsetzbar ist. Ein von unten montiertes Himmelmodul umfasst einen Innenhimmel, der als Lagerschale angesehen werden kann, an der eine Rolloanordnung angeordnet ist. Die Rolloanordnung umfasst zwei Wickelwellen, die mit ihren Enden jeweils in einer Führungsschiene gelagert sind, die an dem Innenhimmel angeordnet ist. Die Führungsschienen bilden seitliche Lagerelemente der Rolloanordnung, so dass die Rolloanordnung über die Führungsschienen an dem Innenhimmel befestigt ist. Die Bereiche des Daches, an denen der Innenhimmel von unten befestigt ist, bilden einen dachfesten Trägerabschnitt.

Aus der Druckschrift EP 2 327 576 A1 ist ein Fahrzeugdach bekannt, das eine Rolloanordnung aufweist, bei der eine Lagerschale an seitlichen Dachlängsholmen fixiert ist. Auf der Lagerschale ist eine Rolloeinheit angeordnet, die eine Rollobahn umfasst, welche an Lagerelementen aufwickelbar ist.

Der Erfindung liegt die Aufgabe zugrunde, ein Fahrzeugdach der einleitend genannten Gattung zu schaffen, bei dem die Rolloanordnung auch nachträglich, das heißt bei mit einem Karosserierohbau verbundenen Fahrzeugdach von unten montierbar ist.

Diese Aufgabe ist erfindungsgemäß durch das Fahrzeugdach mit den Merkmalen des Patentanspruchs 1 gelöst.

Das Fahrzeugdach nach der Erfindung zeichnet sich also dadurch aus, dass es eine Rolloanordnung mit einer Lagerschale umfasst, auf der die mindestens eine Rolloeinheit über seitliche Lagerelemente befestigt ist und die von unten an dem mindestens einen Trägerabschnitt fixiert ist. Die Rolloanordnung umfasst somit in Form der Lagerschale, auf der die Rolloeinheit angeordnet bzw. aufgesetzt ist, eine Montageplattform, die nach Art eines Moduls mit dem Fahrzeugdach verbindbar ist, und zwar auch, wenn das Fahrzeugdach schon an dem Fahrzeugrohbau fixiert ist. Damit lässt sich die Rolloanordnung modularisiert nachträglich und automatisierbar montieren. Dies ermöglicht es wiederum, die Rolloanordnung erst zu einem späten Zeitpunkt an den jeweiligen Kundenwunsch anzupassen, beispielsweise hinsichtlich der Farbe der Rollobahn. Zudem kann die Rolloanordnung in einem Bereich des Fahrzeugdachs von unten an dieses herangeführt werden, der außerhalb des transparenten Dachabschnitts liegt. Die Rolloanordnung beeinträchtigt damit nicht den zur Verfügung gestellten Dachdurchsichtsbereich. Die Lagerelemente, über die die Rolloeinheit auf die Lagerschale aufgesetzt ist, dienen beispielsweise zur Lagerung des Rollowickels und auch zur Kopplung der betreffenden Rolloeinheit an dachfeste Führungsschienen und sind insbesondere jeweils als Kunststoff-Spritzgießteil ausgebildet. Die Lagerschale ist insbesondere einstückig ausgebildet und erstreckt sich in Dachquerrichtung.

Bei einer bevorzugten Ausführungsform des Fahrzeugdachs nach der Erfindung ist die Rolloanordnung derart ausgelegt, dass die Rolloeinheit auch bezüglich der Lagerschale und dem Trägerabschnitt positionierbar ist, wenn die Lagerschale bereits an dem dachfesten Trägerabschnitt fixiert ist. Dies bedeutet also, dass die Rolloeinheit an der Lagerschale vorpositioniert ist, die Lagerschale zusammen mit der vorpositionierten Rolloeinheit an dem Trägerabschnitt befestigt wird und anschließend eine Feinpositionierung der Rolloeinheit an der Lagerschale erfolgen kann, damit die Rolloeinheit ihre exakte Montageposition an dem Fahrzeugdach einnimmt.

Die Rolloanordnung weist zur Durchführung der Positionierung der Rolloeinheit gegenüber der Lagerschale und dem Trägerabschnitt mindestens eine Positionierhilfe auf. Die Positionierhilfe umfasst einen Positionierschlitz, der für die seitlichen Lagerelemente jeweils an den Lagerschalen ausgebildet ist und in dem ein Positionierelement, insbesondere eine Positionierrippe des jeweiligen Lagerelements eingreift.

Um die Lagerelemente im vorpositionierten Zustand an der Lagerschale halten zu können, sind die Lagerelemente vorzugsweise jeweils mit mindestens einem Rückhalteelement versehen, das eine Öffnung der Lagerschale durchgreift und dieselbe untergreift. Das Rückhalteelement ist vorzugsweise einstückig mit dem jeweiligen insbesondere als Spritzgießteil ausgebildeten Lagerelement gefertigt.

Die Öffnung, die zusammen mit dem Positionierschlitz ausgebildet sein kann, hat bei einer speziellen Ausführungsform des Fahrzeugdachs nach der Erfindung einen erweiterten Einsetzbereich, dessen Abmessungen größer sind als die Querabmessungen des Rückhalteelements, und einen verjüngten Haltebereich, dessen Abmessungen geringer sind als diejenigen eines Rückhalteabschnitts des betreffenden Rückhalteelements. Dies bedeutet, dass die Lagerelemente der betreffenden Rolloeinheit bei der Vormontage der Lagerelemente an der Lagerschale über die Einsetzbereiche aufgesetzt und anschließend verschoben werden, damit die Rückhalteabschnitte der Rückhalteelemente die Lagerschale hintergreifen, wodurch die Rolloeinheit im Wesentlichen verliersicher auf der Lagerschale angeordnet ist. Beispielsweise sind die Rückhalteelemente jeweils als Zapfen mit umgekehrt T-förmigem Längsschnitt ausgebildet.

Um die Rolloeinheit im vormontierten Zustand an der Lagerschale verspannen zu können, weisen die Lagerelemente vorzugsweise an ihren Unterseiten jeweils mindestens ein Gleitelement auf, das auf der Lagerschale aufsteht und das insbesondere in Dachhochrichtung federnd ausgebildet ist.

Um eine Vormontagestellung der Rolloeinheit auf der Lagerschale zu definieren, können die Lagerelemente jeweils eine Rastnase aufweisen, die in der Vormontagestellung in eine korrespondierende Aufnahme der Lagerschale eingreift. Wenn das Lagerelement bei der Vormontage gegenüber der Lagerschale verschoben wird, ist die Vormontagestellung erreicht, wenn die Rastnase in die korrespondierende Aufnahme der Lagerschale einrastet.

Um bei der Positionierung am Fahrzeugdach eine präzise Montagelage bezüglich der Dachhochrichtung und der Dachquerrichtung zu erreichen, können die Lagerelemente jeweils mindestens einen stirnseitigen Zentrierzapfen umfassen, der in eine dachfeste Zentrierausnehmung eingreift. Die Zentrierausnehmung ist insbesondere von einem Kanal eines Führungsschienenprofils gebildet, an dem das betreffende Lagerelement in der Montagestellung mit seiner Stirnseite anliegt. Die Stirnseite bildet damit einen Anschlag für das Lagerelement, wodurch auch eine exakte Positionierung der Rolloeinheit in Dachlängsrichtung realisiert ist.

Bei der Montage der Rolloanordnung an dem Trägerabschnitt ist es vorteilhaft, wenn schon beim Heranführen eine möglichst präzise Vorpositionierung der Lagerelemente gegenüber dem Trägerabschnitt erreicht wird. Dies wird beispielsweise so erreicht, dass die Lagerelemente jeweils eine Zentrierwanne mit zwei Seitenwänden aufweisen, zwischen denen von oben ein Profilabschnitt eines Führungsschienenprofils aufgenommen ist und zwischen denen ein Lagerelementboden ausgebildet ist, auf dem der Profilabschnitt in der Montagestellung aufliegt. Die Seitenwände und der Profilabschnitt sind hierbei vorzugsweise jeweils mit einer Einführschräge versehen. Die Einführschrägen verhindern ein Verklemmen vor Erreichen der Endstellung.

Bei einer bevorzugten Ausführungsform des Fahrzeugdachs nach der Erfindung sind die Lagerelemente jeweils als Fortsetzungen eines Führungsschienenprofils ausgebildet. In diesem Falle haben die Lagerelemente insbesondere jeweils eine Führungsbahn für einen Zugspriegelgleiter, die mit einem Führungskanal des betreffenden Führungsschienenprofils fluchtet. Zudem weisen die Lagerelemente dann vorzugsweise jeweils eine Zentrierbahn auf, in dem ein seitliches Führungsband der Rollobahn geführt ist und die mit einem Kanal des Führungsschienenprofils fluchtet. Die Rolloeinheit kann damit also komplett an der Lagerschale vormontiert sein und muss nach deren Montage an dem Trägerabschnitt und einer Positionierung der Lagerelemente nur noch über eine Betätigung eines Zugspriegels in eine Beschattungsposition gebracht werden.

Des Weiteren haben die Zugspriegelgleiter vorzugsweise jeweils eine Koppelmöglichkeit zur Anbindung eines Antriebskabels. Diese ist beispielsweise als Aufnahme für ein Koppelelement des jeweiligen Antriebskabels ausgebildet, das von einem Antriebsmotor angetrieben ist. Die Aufnahme kann nach oben offen sein und das Koppelelement in Längsrichtung des betreffenden Führungsschienenprofils spielfrei aufnehmen. Die Aufnahmen können Einführschrägen für das jeweilige Koppelelement haben.

Durch die vorstehend beschriebene Ausführung der Aufnahmen für das Koppelelement ist es möglich, die Rolloanordnung einschließlich der Rollobahn und einschließlich des Zugspriegels von unten an den dachfesten Führungsschienenprofilen zu montieren, die vorzugsweise den Trägerabschnitt des Fahrzeugdachs nach der Erfindung bilden. Beim Heranführen der Rolloanordnung an die Führungsschienenprofile tauchen die entsprechend positionierten Koppelelemente in die Aufnahmen ein. Damit ist direkt eine Kopplung zwischen dem Antriebsmotor und dem Zugspriegel hergestellt.

Bei an den dachfesten Führungsschienenprofilen vormontierten Antriebskabeln sind die Koppelelemente vorzugsweise verdrehgesichert in den Führungsschienenprofilen geführt, so dass sie bei der Montage der Rolloanordnung gegenüber den Aufnahmen der Zugspriegelgleiter schon ihre Einbaulage einnehmen. Die Koppelelemente umfassen insbesondere eine Zunge, die in Richtung der vertikalen Dachlängsmittelebene weist. Die Zungen der Koppelelemente stehen also jeweils in Richtung der vertikalen Dachlängsmittelebene vor und müssen beim Heranführen der Rolloanordnung nur mit den Zugspriegelgleitern bzw. den Aufnahmen derselben in Eingriff gebracht werden.

Die Lagerelemente dienen vorzugsweise nicht nur zur Stoffzentrierung, das heißt zur Zentrierung der Rollobahn in Dachquerrichtung sondern auch zur Lagerung des Rollowickels. Insbesondere können die Lagerelemente jeweils einen Lagerzapfen für ein Wickelrohr, insbesondere für eine mittels einer Wickelfeder vorgespannte Wickelwelle umfassen. Die Rolloeinheit kann aber auch wickelrohrfrei ausgebildet sein. Dann sind die seitlichen Führungsbänder vorzugsweise jeweils als Rollfeder ausgebildet, die außerhalb der Führungsschienen ein Aufwickeln der Rollobahnen bewirkt.

Um die Steifigkeit des betreffenden Fahrzeugs im Dachbereich zu erhöhen, kann die Lagerschale bezogen auf die vertikale Dachlängsmittelebene beidseits jeweils mit einem Fixierblech versehen sein, über das sie karosseriefest fixierbar ist. Beispielsweise werden die Fixierbleche im montierten Zustand mit den B-Säulen des betreffenden Fahrzeugs verbunden.

Zudem ist es vorteilhaft, wenn die Lagerschale in der Montagestellung von unten mit den Führungsschienenprofilen verschraubt ist. Eine hohe Positionstreue wird auch dadurch erreicht, wenn die Lagerelemente der Rolloeinheit von unten ebenfalls mit den Führungsschienenprofilen verschraubt sind.

Bei einem Fahrzeugdach mit zwei transparenten Dachabschnitten kann die Rolloanordnung zwei Rolloeinheiten umfassen, die auf der Lagerschale angeordnet sind und die gegensinnig ausziehbar sind.

Die Lagerschale kann eine Ablaufkante für die Rollobahn bilden und so eine Wölbung des ausgezogenen Bereichs der Rollobahn vorgeben.

Der Trägerabschnitt, an dem die Rolloanordnung bzw. die Lagerschale der Rolloanordnung in Einbaulage befestigt ist, kann von einem Rahmen eines Dachöffnungssystems gebildet sein. Das Dachöffnungssystem kann seitliche Führungsschienen bzw. Führungsschienenprofile aufweisen, an welchen die Rollobahn über seitliche Führungsbänder geführt ist.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:

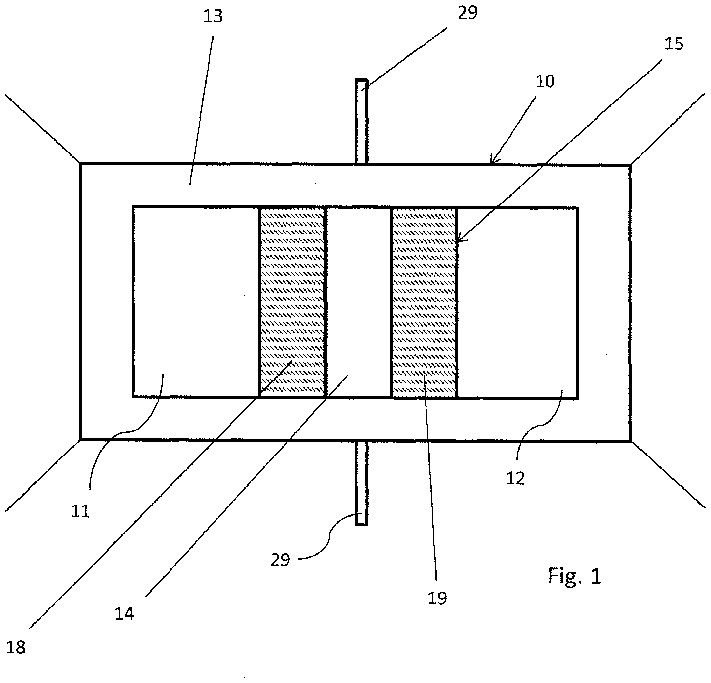

- Figur 1: eine Draufsicht auf ein Fahrzeugdach nach der Erfindung;

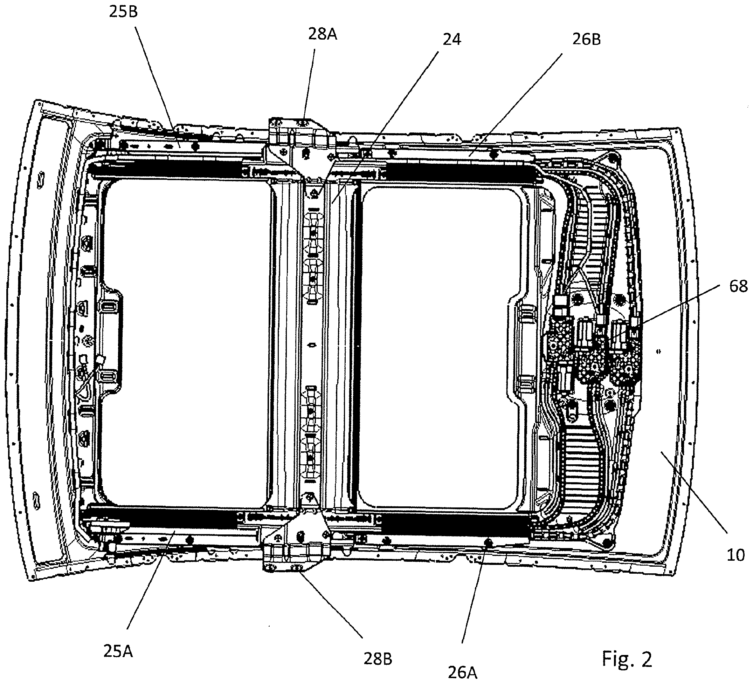

- Figur 2: eine Unteransicht des Fahrzeugdachs;

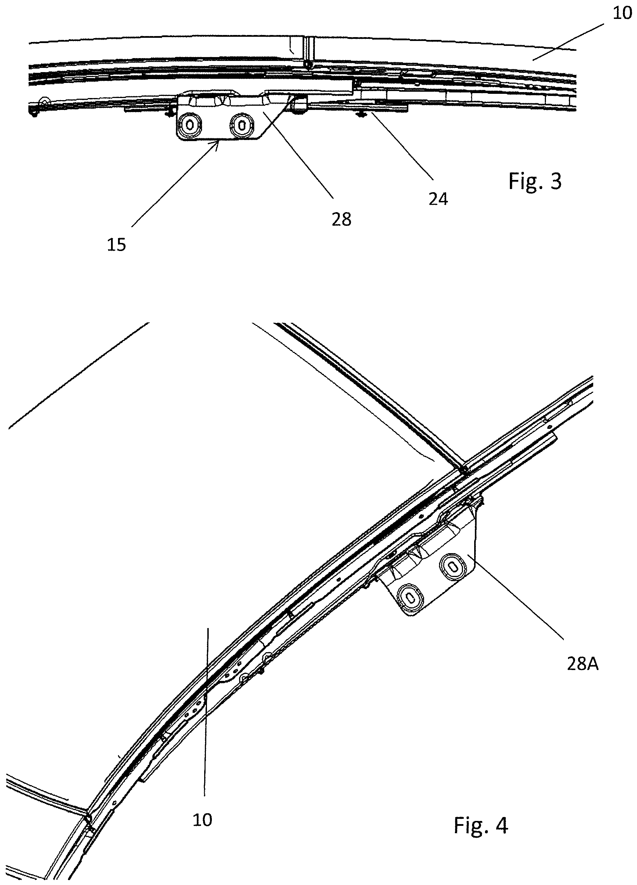

- Figur 3: eine ausschnittsweise Seitenansicht des Fahrzeugdachs;
- Figur 4: eine ausschnittsweise perspektivische Draufsicht des Fahrzeug-dachs;
- Figur 5: eine Rolloanordnung des Fahrzeugdachs;
- Figuren 6 bis 8: eine Vormontage einer Rolloeinheit der Rolloanordnung in einer Seitenansicht;
- Figuren 9 bis 11: die Vormontage in einer Vorderansicht;
- Figuren 12 bis 14: die Vormontage in einer Unteransicht;

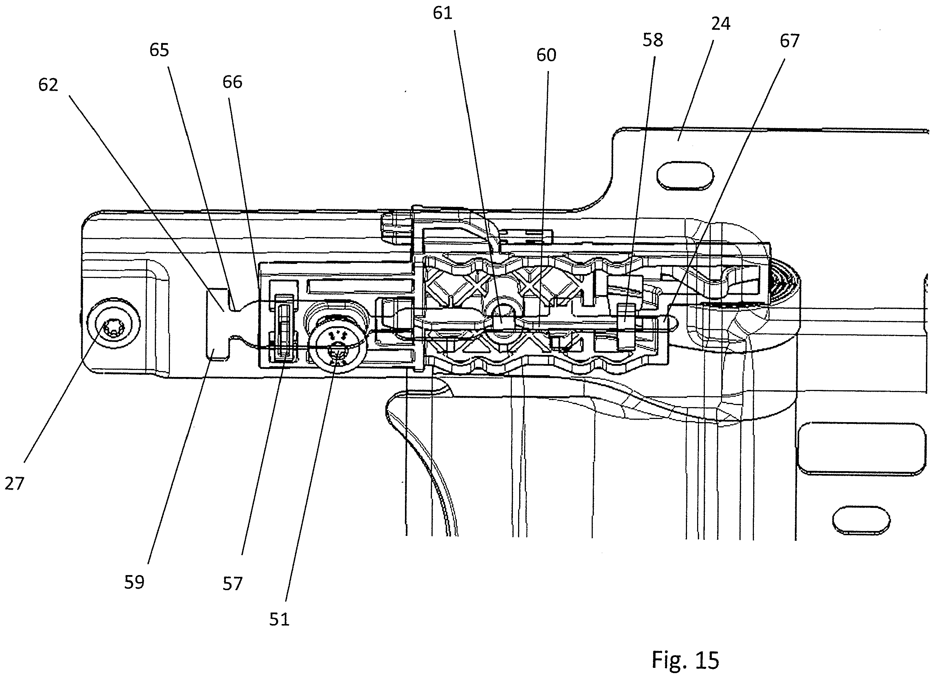

- Figur 15: eine perspektivische Unteransicht der Rolloanordnung im Vormon-tagezustand;

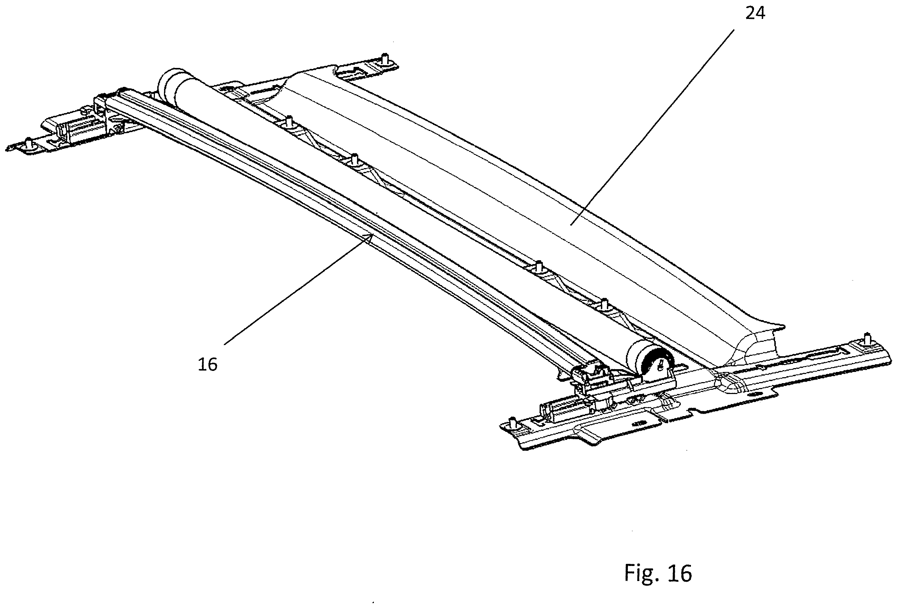

- Figur 16: die Rolloanordnung mit einer vormontierten Rolloeinheit;
- Figur 17: die Rolloanordnung mit zwei vormontierten Rolloeinheiten;
- Figur 18: ein Lagerelement einer Rolloeinheit in einer perspektivischen Darstellung;
- Figur 19: eine Unteransicht des Lagerelements nach Figur 18;
- Figur 20: eine Seitenansicht des Fahrzeugdachs bei der Montage der Rolloanordnung;
- Figuren 21 und 22: einen Schnitt durch das Fahrzeugdach für zwei Zustände bei der Anbindung der Rolloanordnung an das Fahrzeugdach;
- Figuren 23 und 24: die beiden Zustände nach den Figuren 21 und 22, jedoch in einem perspektivischen Schnitt;
- Figur 25: eine perspektivische Ansicht der Rolloanordnung in deren am Fahrzeugdach montieren Zustand, jedoch vor einer Endpositionierung der Rolloeinheit;
- Figur 26: eine Seitenansicht der an dem Fahrzeugdach montierten Rolloanordnung;
- Figur 27: eine Draufsicht auf die Rolloanordnung im Bereich eines Zugspriegelgleiters;
- Figuren 28 bis 30: perspektivische Ansichten der Rolloanordnung bei der Endpositionierung der Rolloeinheit;
- Figuren 31 bis 33: Unteransichten für verschiedene Stellungen bei der Endpositionierung der Rolloeinheit;
- Figuren 34 bis 36: Seitenansichten für verschiedene Stellungen bei der Endpositionierung der Rolloeinheit; und
- Figuren 37 bis 39: Draufsichten für verschiedene Stellungen bei der Endpositionierung der Rolloeinheit.

In der Zeichnung ist ein Fahrzeugdach 10 dargestellt, das ein Panoramadach eines Personenkraftwagens ist und einen vorderen bzw. bugseitigen transparenten Dachabschnitt 11 und einen hinteren bzw. heckseitigen transparenten Dachabschnitt 12 aufweist. Der vordere transparente Dachabschnitt 11 ist von einem verstellbaren Deckelelement eines Schiebedachsystems gebildet. Die transparenten Dachabschnitte 11 und 12 sind von einem blickdichten Festdachabschnitt 13 umrahmt und durch einen sich in Fahrzeugquerrichtung erstreckenden stegartigen Festdachabschnitt 14 voneinander getrennt.

Zum wahlweisen Abschatten oder zumindest teilweisen Freigeben der transparenten Dachabschnitte 11 und 12 weist das Fahrzeugdach 10 eine Rolloanordnung 15 auf, die zwei Rolloeinheiten 16 und 17 umfasst, von denen die Rolloeinheit 16 dem vorderen transparenten Dachabschnitt 11 und die Rolloeinheit 17 dem hinteren transparenten Dachabschnitt 12 zugeordnet ist. Zur Abschattung des vorderen transparenten Dachabschnitts 11 weist die Rolloeinheit 16 eine Rollobahn 18 auf. Zur Abschattung des hinteren transparenten Dachabschnitts 12 weist die Rolloeinheit 17 eine Rollobahn 19 auf. Die Rollobahnen 18 und 19 sind jeweils aus einem blickdichten, wickelbaren Stoff gebildet und in dem unterhalb des Festdachabschnitts 14 angeordneten Bereich zu einem Rollowickel 20 bzw. 21 aufwickelbar. Zur Betätigung, das heißt zum Ausziehen oder Aufwickeln der Rollobahnen 18 und 19 weisen die Rolloeinheiten 16 und 17 jeweils einen Zugspriegel 22 bzw. 23 auf, der an der jeweiligen Rollobahn 18 bzw. 19 an dem dem Rollowickel 20 bzw. 21 abgewandten Rand angeordnet ist.

Die Rolloeinheiten 16 und 17 sind im vorliegenden Fall gleichartig ausgebildet, weswegen die nachfolgende Beschreibung teilweise nur anhand der dem vorderen transparenten Dachabschnitt 11 zugeordneten Rolloeinheit 16 erfolgt.

Die Rolloanordnung 15 umfasst eine Lagerschale 24, die von unten mit einem Paar vorderer Führungsschienen bzw. Führungsschienenprofilen 25A und 25B, die entlang den seitlichen Rändern des vorderen transparenten Dachabschnitts 11 angeordnet sind, und mit einem Paar hinterer Führungsschienen bzw. Führungsschienenprofilen 26A und 26B, die entlang den seitlichen Rändern des hinteren transparenten Dachabschnitts 12 angeordnet sind, mittels Fixierschrauben 27 verschraubt ist und eine Tragplatte für die Rolloeinheiten 16 und 17 bildet. Zudem ist die Lagerschale 24 an ihren bezogen auf eine vertikale Dachlängsmittelebene beidseits angeordneten Rändern jeweils mit einem Fixierblech 28A bzw. 28B versehen, das mit einer jeweiligen B-Säule 29 des betreffenden Fahrzeugaufbaus verschraubt werden kann. Die Führungsschienen 25A, 25,B, 26A und 26B bilden den Trägerabschnitt für die Lagerschale 24. An ihren in Dachquerrichtung verlaufenden Rändern bildet die Lagerschale 24 Ablaufkanten für die Rollobahnen 18 und 19.

Die Rolloeinheiten 16 und 17 umfassen jeweils bezogen auf die vertikale Dachlängsmittelebene spiegelsymmetrisch zueinander ausgebildete Lagerelemente 30, über die die jeweilige Rolloeinheit 16 bzw. 17 auf der Lagerschale 24 montiert ist. Zudem weisen die Rolloeinheiten 16 und 17 jeweils eine Wickelwelle 31 auf, die zwischen den jeweiligen Lagerelementen 30 einer Rolloeinheit drehbar gelagert ist und ein mittels einer nicht näher dargestellten Wickelfeder in Aufwickelrichtung der jeweiligen Rollobahn 18 bzw. 19 vorgespanntes Wickelrohr hat. Zur Lagerung der Wickelwelle 31 weisen die Lagerelemente 30 jeweils einen Lagerzapfen 32 auf.

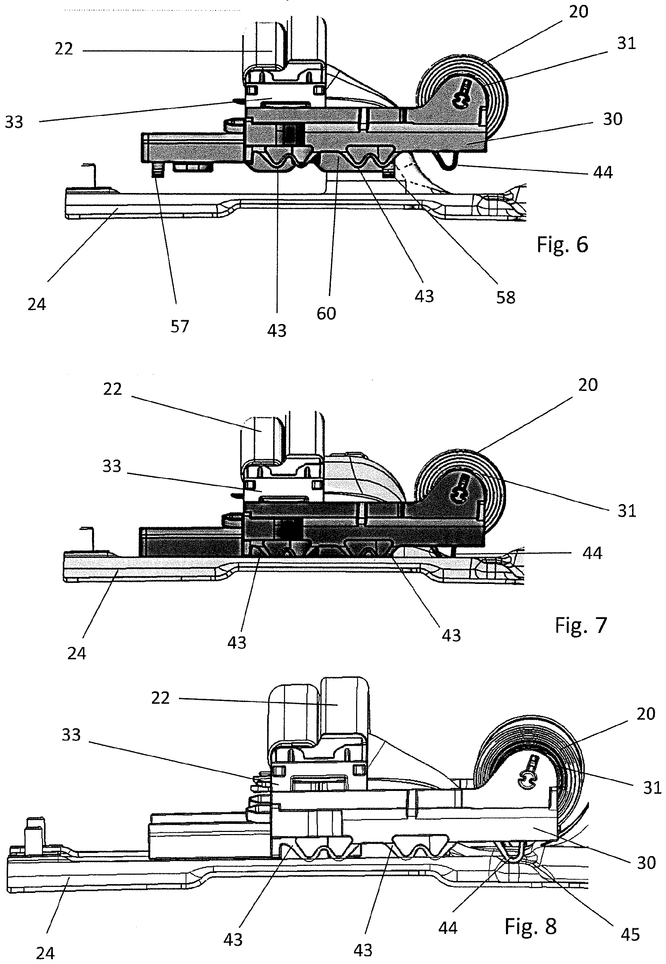

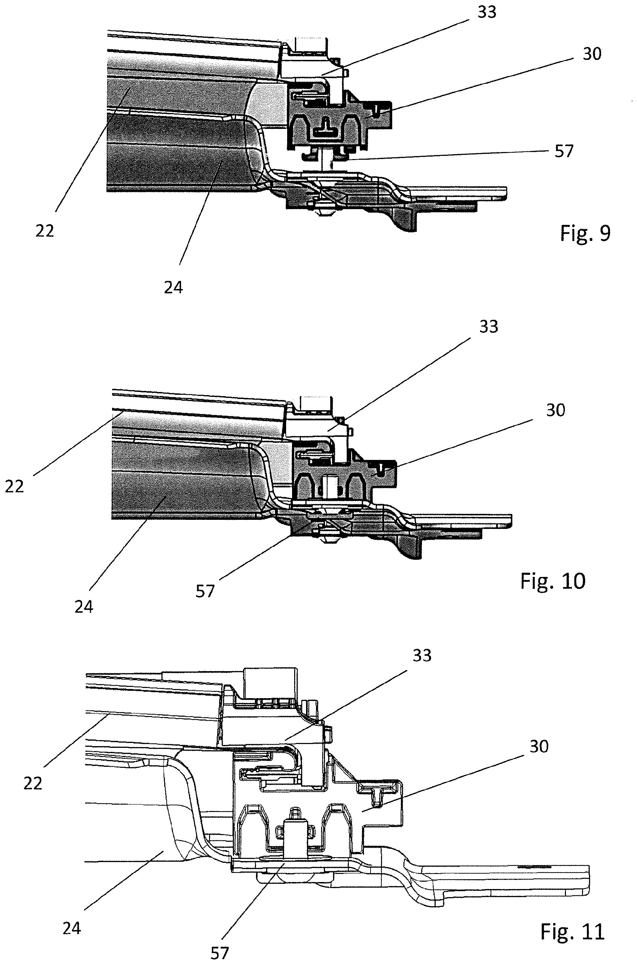

Des Weiteren umfassen die Rolloeinheiten 16 und 17 jeweils den Zugspriegel 22 bzw. 23, der an seinen Enden jeweils mit einem Zugspriegelgleiter 33 versehen ist. Die Zugspriegelgleiter 33 sind in den Führungsschienen 25A und 25B bzw. 26A und 26B geführt und in der beispielsweise in den Figuren 6 und 9 dargestellten Vormontagestellung in einer Führungsbahn 34 des jeweiligen Lagerelements 30 angeordnet, die mit einem Führungskanal 35 der betreffenden Führungsschiene 25A, 25B. 26A bzw. 26B fluchtet. Um die Vormontagestellung der Zugspriegelgleiter 33 in den Führungsbahnen 34 der Lagerelemente 30 zu sichern, weisen letztere jeweils an der äußeren Begrenzungswand der Führungsbahn 34 eine Rastmulde 36 auf, in die ein Federelement 37 des jeweiligen Führungsspriegelgleiters 33 eingreift.

Die Lagerelemente 30, die jeweils als Kunststoffspritzgießbauteil ausgebildet sind, weisen zudem eine Zentrierbahn 38 auf, in der ein jeweiliges seitliches Führungsband 39 der Rollobahn 18 geführt ist, das aus einem Metallband oder Kunststoffband gebildet ist und mit einer Anbindungslasche 331 des betreffenden Zugspriegelgleiters 33 verbunden ist, die ebenfalls in die Zentrierbahn 38 eingreift. Die Zentrierbahn 38 fluchtet mit einem Kanal 40 der jeweiligen Führungsschiene 25A, 25B, 26A, 26B.

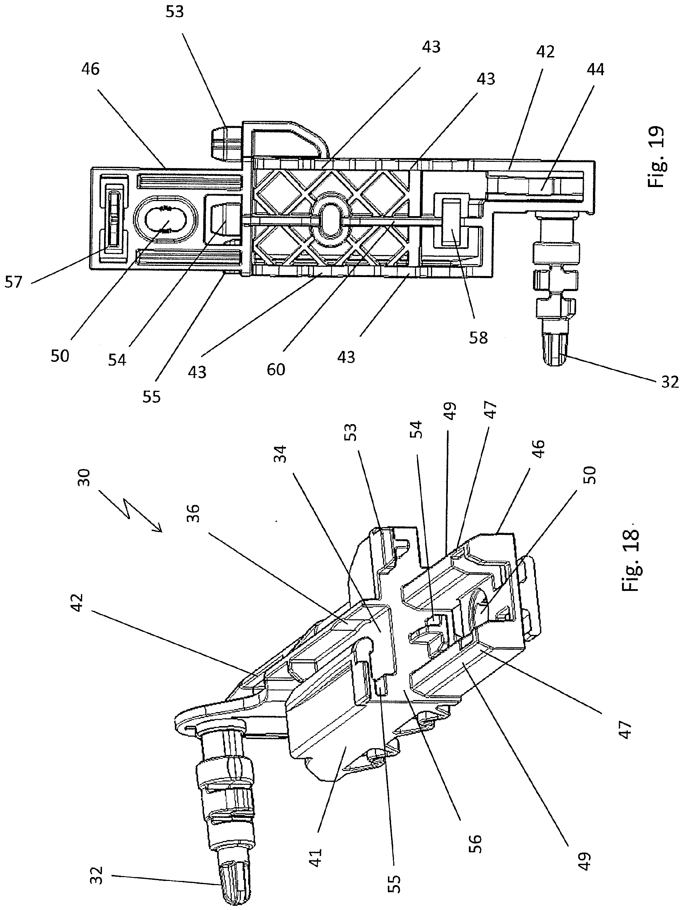

Die Lagerelemente 30 einer Rolloeinheit 16 bzw. 17 sind spiegelsymmetrisch zueinander ausgebildet. Wie die Figuren 18 und 19 zeigen, umfassen die Lagerelemente 30 jeweils einen Basiskörper 41, der einen hinteren Fortsatz 42 hat, von dem der betreffende Lagerzapfen 32 zur Lagerung des Rollowickels 20 bzw. 21 in Richtung der vertikalen Dachlängsmittelebene bzw. in Dachquerrichtung nach innen vorsteht. In dem Basiskörper 41 sind die Führungsbahn 34 für den betreffenden Zugspriegelgleiter 33 und die Zentrierbahn 38 für die Rollobahn 19 ausgebildet.

An der Unterseite weist der Basiskörper 41 an den seitlichen Rändern jeweils zwei in Dachhochrichtung federnd ausgebildete Gleitelemente 43 auf, über die das Lagerelement 30 auf der Lagerschale 24 aufsteht. Zudem ist an der Unterseite des Basiskörpers 41 eine Rastnase 44 angeordnet, die in der beispielsweise in Figur 8 dargestellten Vormontagestellung in eine Aufnahme bzw. Nut 45 der Lagerschale 24 eingreift und so eine Vormontagestellung des Lagerelements 30 an der Lagerschale 24 definiert (vgl. Fig. 8).

Stirnseitig, das heißt auf der dem Lagerzapfen 32 abgewandten Ende ist an dem Basiskörper 41 eine sich in Dachlängsrichtung erstreckende Zentrierwanne 46 angeordnet, die zwei Seitenwände 47 aufweist, welche durch einen Wannenboden 48 miteinander verbunden sind. Die Seitenwände 47 weisen an ihrer Oberseite jeweils eine Einfuhrschräge 49 auf. An dem Wannenboden 48 ist ein Halteloch 50 für eine Positionierschraube 51 ausgebildet. Das Halteloch 50 ist langlochartig ausgebildet, so dass die Positionierschraube 51 in dem Halteloch 50 Spiel in Dachlängsrichtung hat.

Mittels der Positionierschraube 51 ist das Lagerelement 30 an der betreffenden Führungsschiene 25A, 25B, 26A bzw. 26B und an der Lagerschale 24 verschraubt.

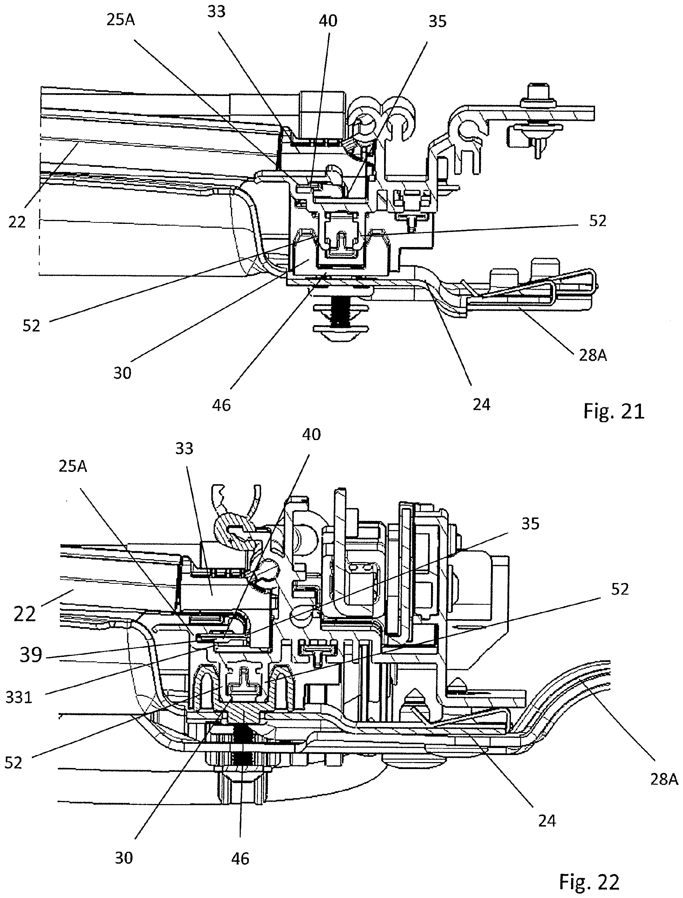

Wie den Figuren 21 bis 24 zu entnehmen ist, wirken die Seitenwände 47 der Zentrierwanne 46 mit nach unten vorstehenden Stegen 52 der betreffenden Führungsschiene 25A, 25B, 26A bzw. 26B zusammen, und zwar derart, dass diese zumindest weitgehend formschlüssig in den Raum zwischen den Seitenwänden 47 von oben eingreifen und auf dem Wannenboden 48 aufstehen. Die Stege 52, die einen Profilabschnitt der jeweiligen Führungsschiene 25A, 25B, 26A bzw. 26B darstellen, haben an ihrer Stirnseite jeweils ebenfalls eine Einführschräge 521, die mit der betreffenden Einführschräge 49 der jeweiligen Seitenwand 47 der Zentrierwanne 46 zusammenwirkt. Durch die Zentrierwanne 46 kann eine exakte Vorpositionierung der Lagerelemente 30 an den Führungsschienen 25A, 25B, 26A und 26B in Dachhochrichtung und in Dachquerrichtung erreicht werden.

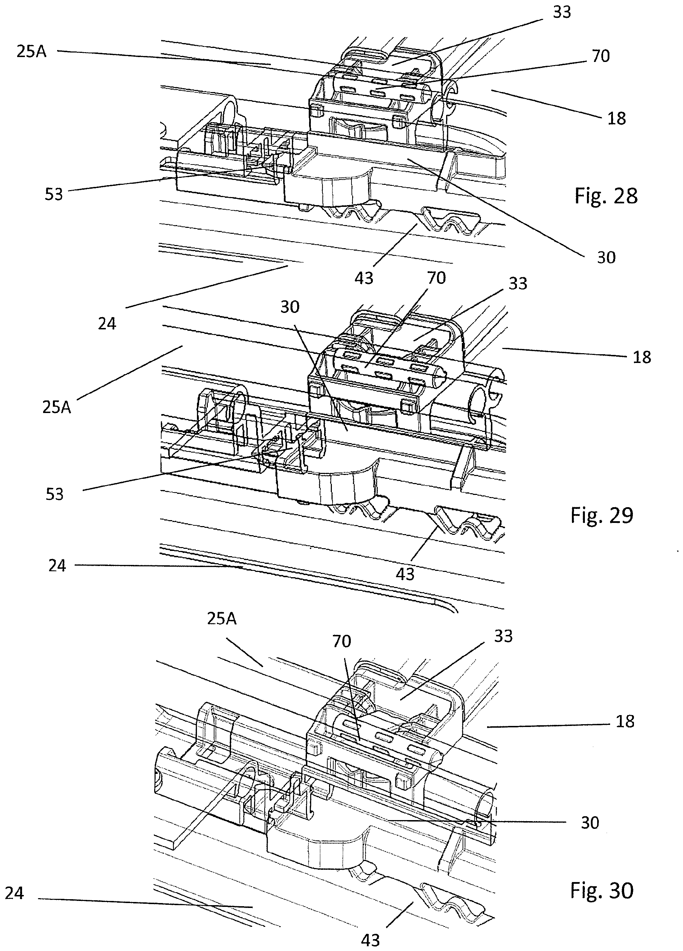

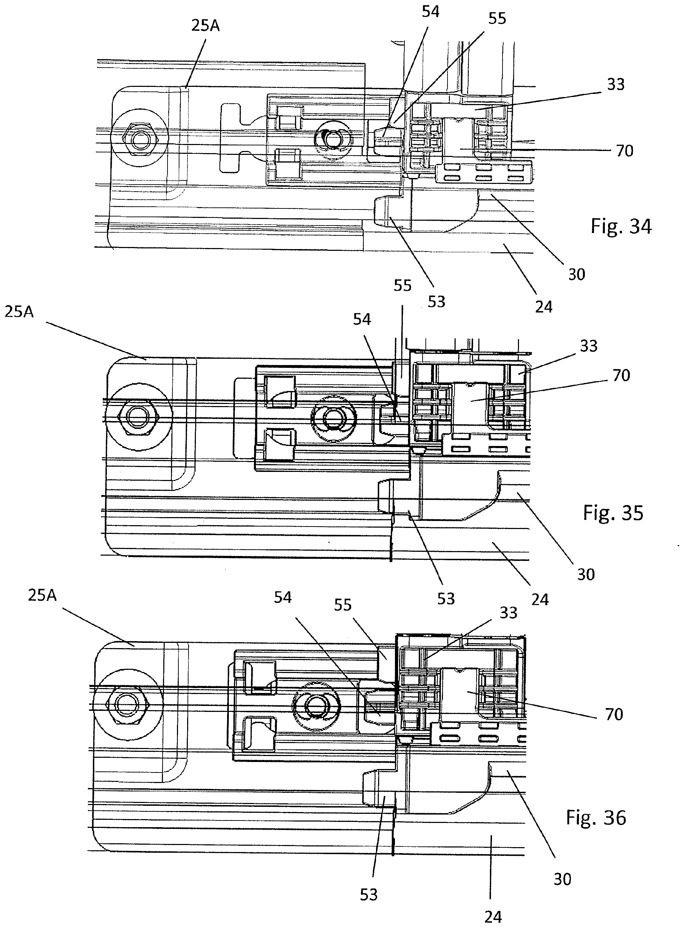

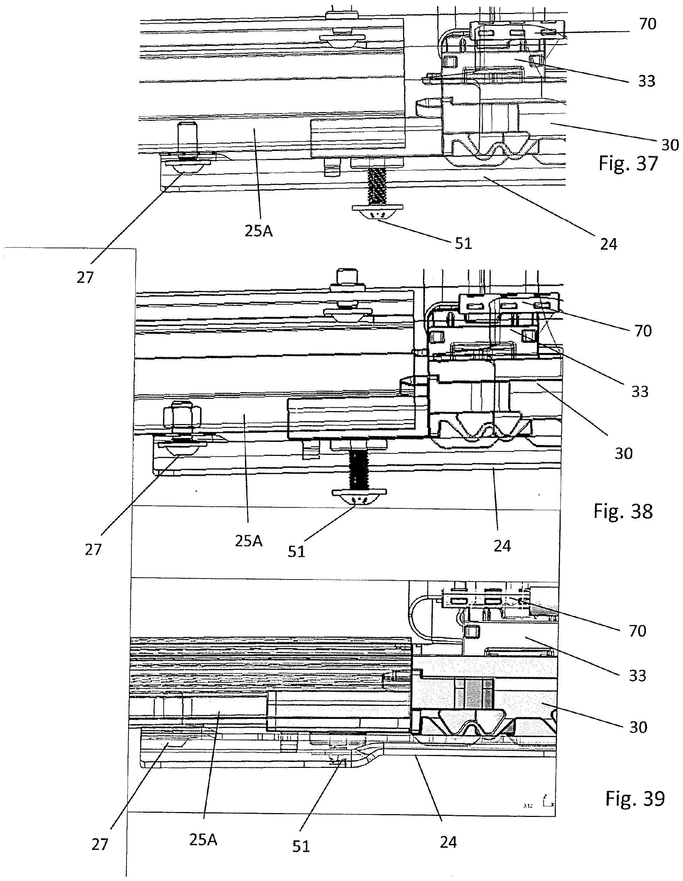

Die Lagerelemente 30 haben auf der dem Lagerzapfen 32 abgewandten Ende drei Zentrierzapfen 53, 54 und 55, die in der Montagestellung (Figuren 29, 32, 35 und 38) in korrespondierende Kanäle bzw. Zentrierausnehmungen der betreffenden Führungsschiene 25A bzw. 25B eingreifen. Die Zentrierzapfen 53 und 54 haben jeweils in der Draufsicht einen T-förmigen und alternativ einen L-förmigen Grundriss, der mit dem Grundriss des jeweiligen Führungsschienenkanals korrespondieren kann. Um bei der Montage die Zentrierzapfen 53 bis 55 leicht in die Führungsschienenkanäle einführen zu können, sind diese ebenfalls jeweils mit Einführschrägen versehen. Eine Stirnfläche 56 des Basiskörpers 41, an der die Zentrierzapfen 53 bis 57 ausgebildet sind, stellt eine Anschlagfläche dar, über die das betreffende Lagerelement 30 an der jeweiligen Führungsschiene 25A, 25B, 26A bzw. 26B in der Montagestellung anliegt. Die Stirnfläche 56 definiert also die Position des Lagerelements 30 gegenüber den Führungsschienen 25A und 25B in Dachlängsrichtung. Die Position in Dachquerrichtung und Dachhochrichtung ist durch die Zentrierzapfen 53 bis 55 definiert.

An der Unterseite der Lagerelemente 30 sind jeweils zwei Rückhalteelemente 57 und 58 ausgebildet, die jeweils aus einem Zapfen mit in etwa umgekehrt T-förmigem Längsschnitt gebildet sind und die in eine schlitzartige Öffnung 59 der Lagerschale 24 eingreifen. Die Rückhalteelemente 57 halten das Lagerelement 30 im Zusammenwirken mit den federnd ausgebildeten Gleitelementen 43 an der Lagerschale 24.

Die Lagerelemente 30 weisen an ihrer Unterseite zudem jeweils eine Positionierrippe 60 auf, die sich in Dachlängsrichtung erstreckt und in einen Positionierschlitz 61 der Lagerschale 24 eingreift. Der Positionierschlitz 61 ist Bestandteil der Öffnung 59, die von den Rückhalteelementen 57 und 58 durchgriffen ist.

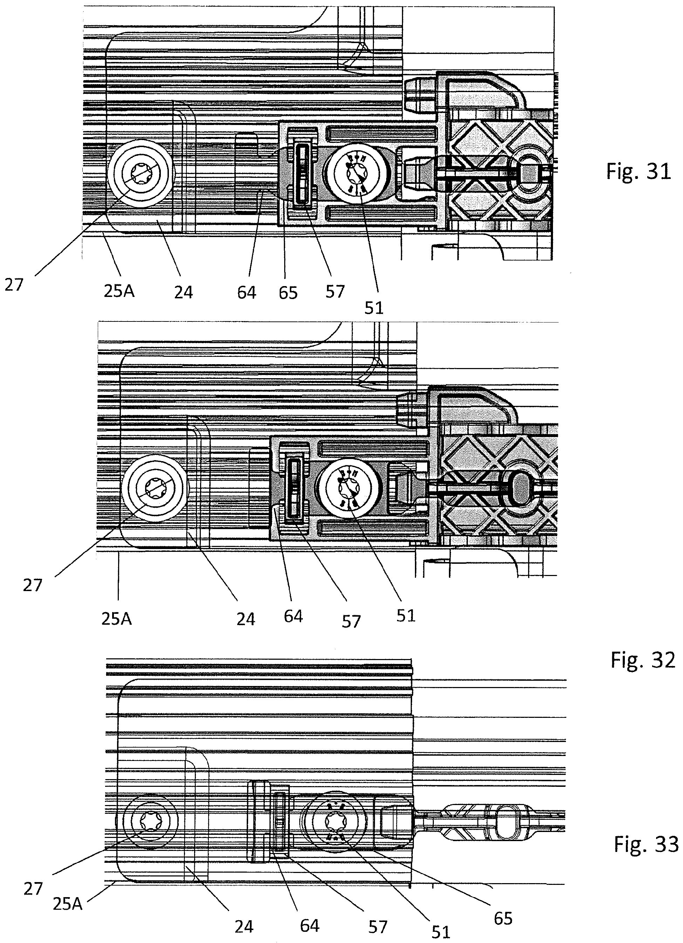

Die Öffnung 59 weist zwei Einsetzbereiche 62 und 63 auf, die jeweils einen im Wesentlichen rechteckigen Grundriss haben und deren Abmessungen geringfügig größer sind als die Querabmessungen eines Rückhalteabschnitts 64 der Rückhalteelemente 57 und 58. Der Einsetzbereich 62 geht in einen verjüngten Haltebereich 65 über, in dessen Bereich das Rückhalteelement 57 in der Endmontagestellung angeordnet ist, so dass der Rückhalteabschnitt 64 das Blech der Lagerschale 24 hintergreifen kann (vgl. Fig. 32).

Die Verjüngung 65 geht wiederum in eine Aufweitung 66 über, in dessen Bereich das Halteloch 50 für die Positionierschraube 51 angeordnet ist. Die Aufweitung 66 ist schmaler als der Einsetzbereich 62, so dass der Rückhalteabschnitt 64 des Rückhaltelements 57 auch im Bereich der Aufweitung 66 das Blech der Lagerschale 24 hintergreifen kann (vgl. Fig. 31). Die Aufweitung 59 geht in den Positionierschlitz 61 über, welcher wiederum in den Einsetzbereich 63 für das Rückhalteelement 58 übergeht. An den Einsetzbereich 63 schließt sich ein weiterer Schlitzabschnitt 67 an.

Zum Antrieb weist die Rolloanordnung 15 einen Elektromotor 68 auf, der drucksteife Antriebskabel 69 antreibt, die an ihren Enden jeweils mit einem Koppelelement 70 versehen sind, das nach Art einer Lasche bzw. Zunge ausgebildet ist und in Richtung der vertikalen Dachlängsmittelebene vorsteht. Zur Anbindung an die Antriebskabel 69 haben die Zugspriegelgleiter 33 an ihrer Oberseite jeweils eine Aufnahme 71, in der das laschenartige Koppelelement 70 des betreffenden Antriebskabels 69 spielfrei in Verschieberichtung des Zugspriegels 22 angeordnet ist. Die Aufnahme 71 hat Einführschrägen 72, entlang derer das Koppelelement 70 bei der Montage der Rolloanordnung 15 an den einen dachfesten Trägerabschnitt darstellenden Führungsschienen 25A, 25B, 26A und 26B in Position gebracht wird.

Die Montage der Rolloanordnung 15 erfolgt in Einbaulage des Fahrzeugdaches 10 an dem Fahrzeugaufbau, und zwar in nachfolgend beschriebener Weise.

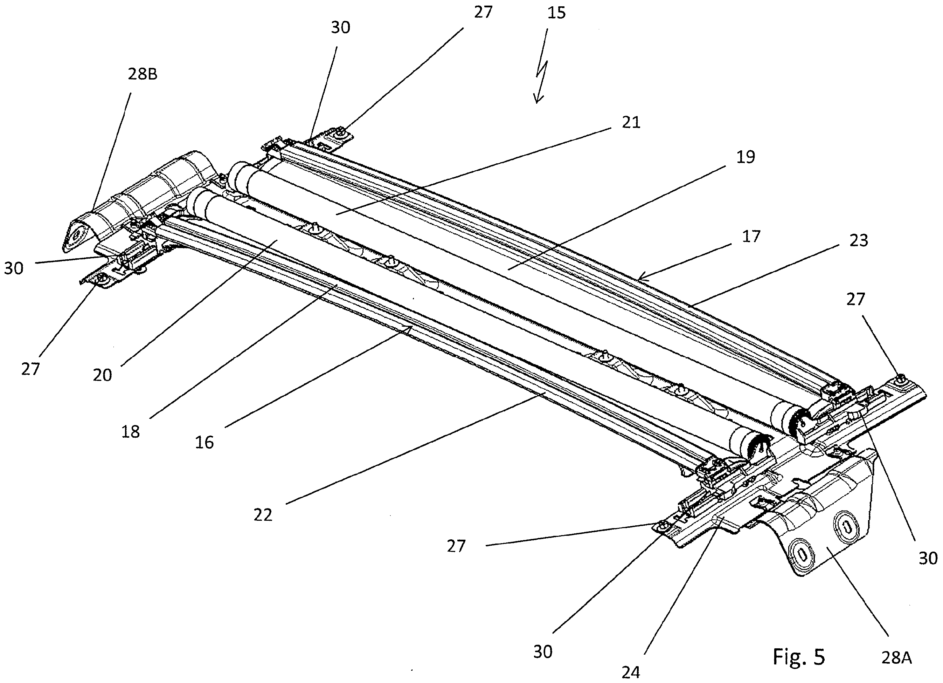

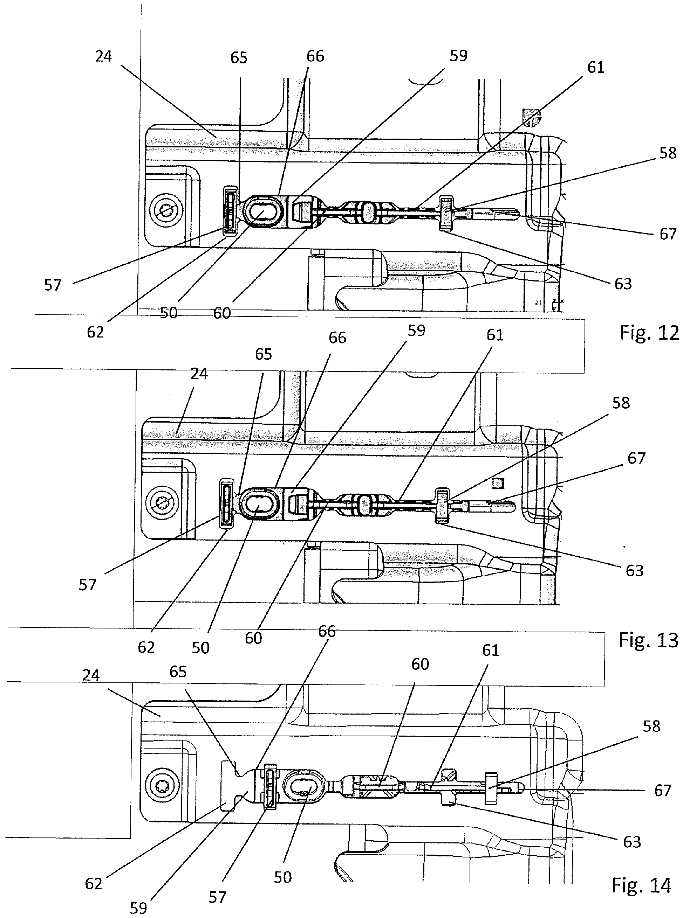

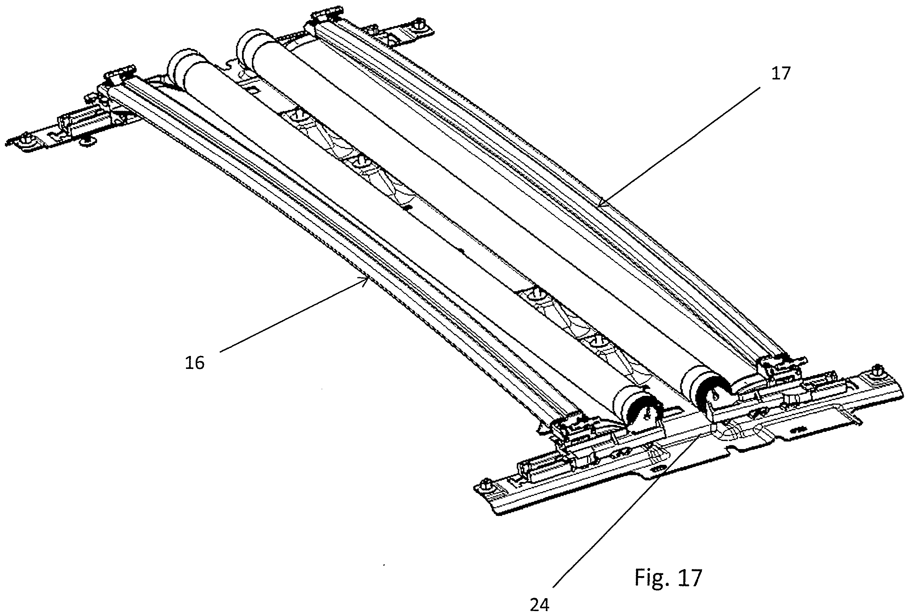

Bei einer Vormontage wird die in Figur 5 dargestellte Rolloanordnung 15 zusammengesetzt. Hierzu werden die Rolloeinheiten 16 und 17, jeweils bestehend aus den seitlichen Lagerelementen 30, der Rollobahn 18 bzw. 19, dem Zugspriegel 22 bzw. 23 mit in den Lagerelementen 30 vorpositionierten Zugspriegelgleitern 33 und der Wickelwelle 31, auf die Lagerschale 24 aufgesetzt, und zwar derart, dass die Rückhalteelemente 64 und 65 durch die Einsetzbereiche 62 und 63 in die Öffnungen 59 der Lagerschale 24 eingeführt werden (vgl. Figuren 6, 7, 9, 10, 12, 13). Damit liegen die Lagerelemente 30 auf der Lagerschale 24 auf. Anschließend werden die Lagerelemente 30 in den Öffnungen 59 so weit verschoben, dass die Rastnasen 44 in die korrespondierenden Nuten 45 einrasten und die Rückhalteelemente 57 und 58 mit ihren Rückhalteabschnitten 64 die Lagerschale 24 hintergreifen (vgl. Figuren 8, 11, 14). Beim Verschieben gleiten die Lagerelemente 30 auf den federnd ausgebildeten Gleitelementen 43. Anschließend wird in die Haltelöcher 50 der Lagerelemente 30 jeweils eine Positionierschraube 51 eingesetzt. Damit ist dann der in Figur 17 dargestellte Vormontagezustand hergestellt.

Im Anschluss wird die Lagerschale 24 mit den Fixierblechen 28A und 28B versehen. (Figur 5).

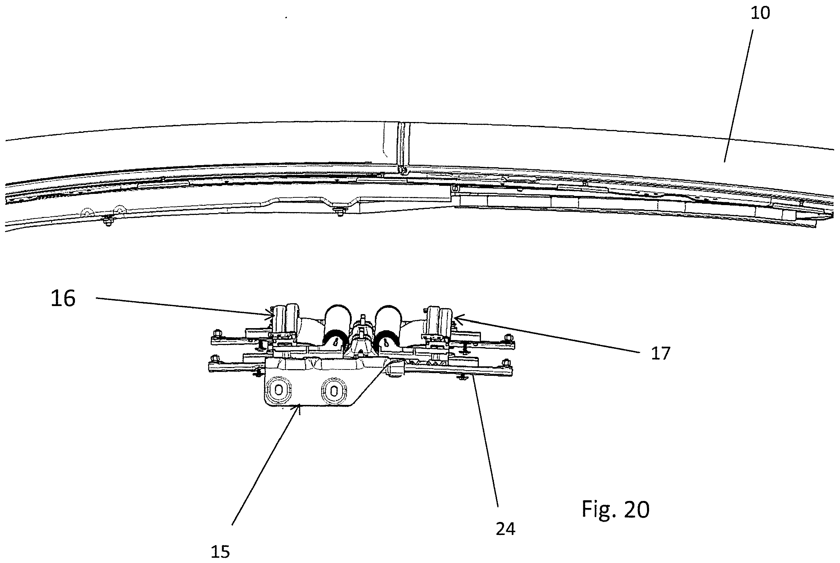

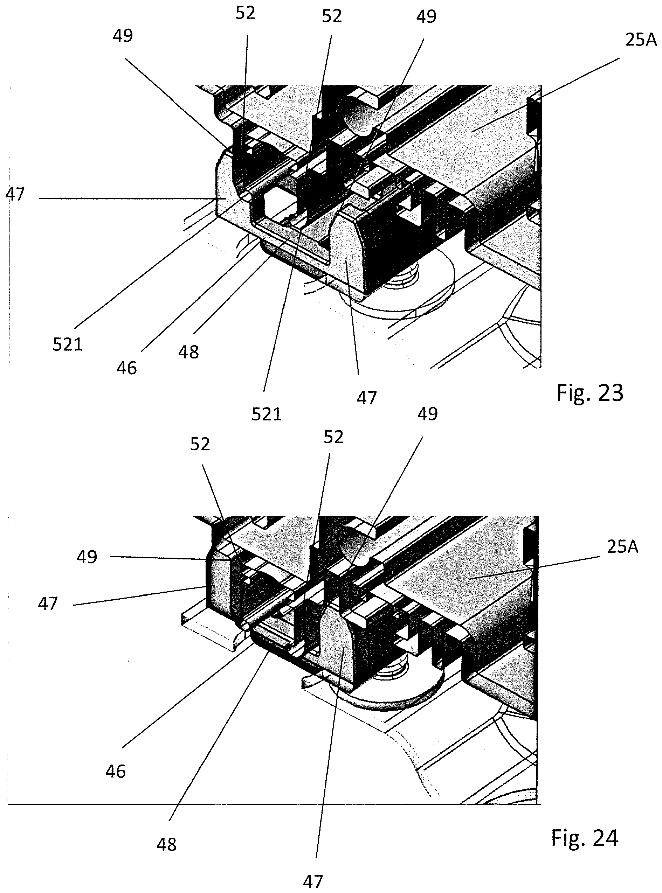

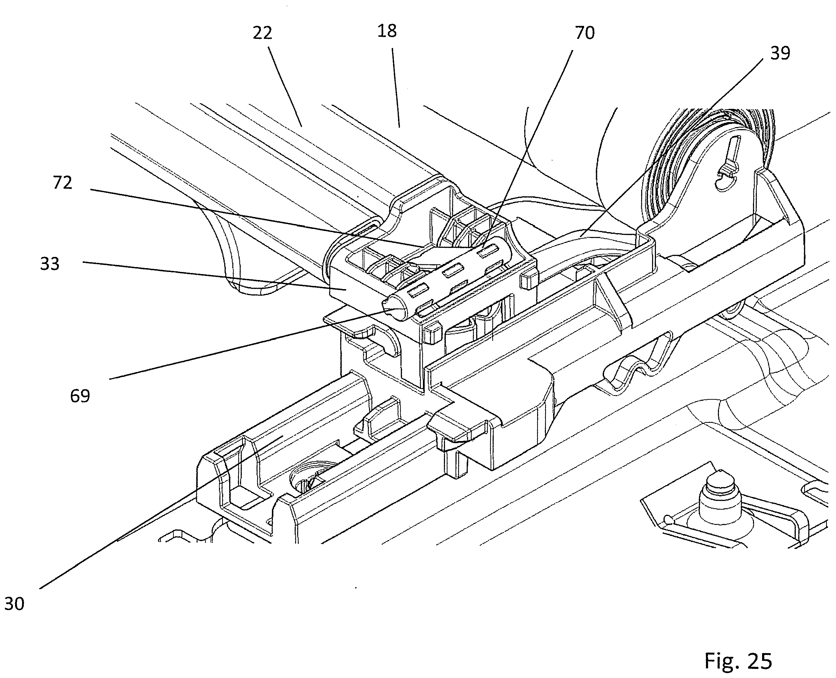

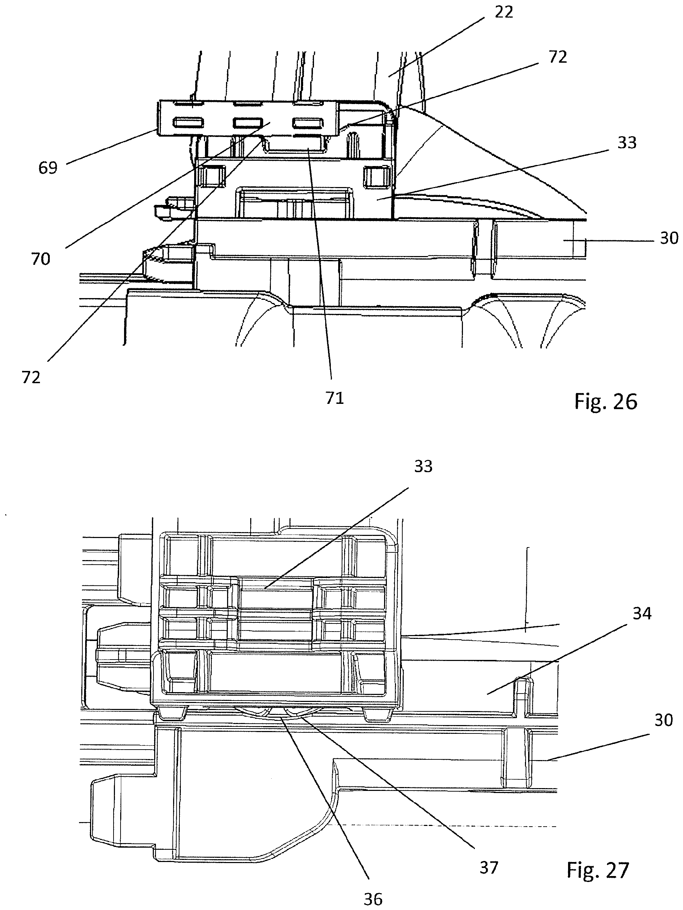

Die vormontierte Rolloanordnung 15 kann nun mittels einer entsprechenden Handling-Einrichtung in einen Fahrzeuginnenraum eingeführt werden und von unten an das Fahrzeugdach 10 herangeführt werden (vgl. Fig. 20). Hierbei greifen die nach unten vorstehenden Stege 52 der Führungsschienen 25A, 25B, 26A und 26B jeweils in die Zentrierwannen 46 der Lagerelemente 30 ein, wodurch eine Vorpositionierung der Rolloanordnung 15 in Dachquerrichtung erfolgt (vgl. Figuren 21, 23). Wenn die Stege 52 an den Wannenböden 48 aufsetzen, ist auch eine Vorpositionierung in Dachhochrichtung erreicht (vgl. Figuren 22, 24). Beim Heranführen der Rolloanordnung 15 an das Fahrzeugdach 10 rücken auch die Koppelelemente 70 der Antriebskabel 69 von oben in die Aufnahmen 71 der Zugspriegelgleiter 33 ein (vgl. Figuren 25, 26). Die Zugspriegelgleiter 33 können Toleranzen dadurch aufnehmen, dass sie in den Führungsbahnen 34 verfahren.

Dann kann die Lagerschale 24 mittels der Fixierschrauben 27, die bereits in entsprechende Schraublöcher eingesetzt sind, an den den Trägerabschnitt darstellenden Führungsschienen 25A, 25B, 26A und 26B verschraubt werden.

Nach dem Fixieren der Lagerschale 24 an den Führungsschienen 25A, 25B, 26A und 26B und der Fixierbleche 28A und 28B an den B-Säulen 29 des Fahrzeugaufbaus werden die Lagerelemente 30 jeweils in Richtung der jeweils zugeordneten Führungsschiene 25A, 25B, 26A und 26B an der Lagerschale 24 verschoben. Hierbei tauchen die Zentrierzapfen 53, 54 und 55 in die korrespondierenden Kanäle der Führungsschienen 25A, 25B, 26A und 26B ein, bis die Stirnflächen 56 der Basiskörper 41 der Lagerelemente 30 an den korrespondierenden Stirnseiten der Führungsschienen 25A, 25B, 26A und 26B anschlagen. Daraufhin können die in den Haltelöchern 50 gehaltenen Positionierschrauben 51 in Gewinde eingeschraubt werden, das an der betreffenden Führungsschiene 25A, 25B, 26A bzw. 26B ausgebildet ist bzw. von einer Mutter gebildet ist, die in dieser angeordnet ist. Damit ist die Endmontagestellung erreicht, in der die Rückhalteabschnitte 64 der Rückhalteelemente 57 und 58 die Lagerschale 24 hintergreifen. Dies ist anhand der Bildfolgen der Figuren 28 bis 30, 31 bis 33, 34 bis 36 und 37 bis 39 jeweils dargestellt.

Die Rolloanordnung 15 kann nun mittels der Antriebskabel 69 betätigt werden.

### Bezugszeichenliste

- 10: Fahrzeugdach
- 11: transparenter Dachabschnitt
- 12: transparenter Dachabschnitt
- 13: Festdachabschnitt
- 14: Festdachabschnitt
- 15: Rolloanordnung
- 16: Rolloeinheit
- 17: Rolloeinheit
- 18: Rollobahn
- 19: Rollobahn
- 20: Rollowickel
- 21: Rollowickel
- 22: Zugspriegel
- 23: Zugspriegel
- 24: Lagerschale
- 25A, B: Führungsschiene
- 26A, B: Führungsschiene
- 27: Fixierschraube
- 28A, B: Fixierblech
- 29: B-Säulen
- 30: Lagerelement
- 31: Wickelwelle
- 32: Lagerzapfen
- 33: Zugspriegelgleiter
- 34: Führungsbahn
- 35: Führungskanal
- 36: Rastmulde
- 37: Federelement
- 38: Zentrierbahn
- 39: Führungsband
- 40: Kanal
- 41: Basiskörper
- 42: Fortsatz
- 43: Gleitelement
- 44: Rastnase
- 45: Nut
- 46: Zentrierwanne
- 47: Seitenwand
- 48: Wannenboden
- 49: Einführschräge
- 50: Halteloch
- 51: Positionierschraube
- 52: Steg
- 53: Zentrierzapfen
- 54: Zentrierzapfen
- 55: Zentrierzapfen
- 56: Stirnfläche
- 57: Rückhalteelement
- 58: Rückhalteelement
- 59: Öffnung
- 60: Positionierrippe
- 61: Positionierschlitz
- 62: Einsetzbereich
- 63: Einsetzbereich
- 64: Rückhalteabschnitt
- 65: Haltebereich
- 66: Aufweitung
- 67: Schlitzabschnitt
- 68: Elektromotor
- 69: Antriebskabel
- 70: Koppelelement
- 71: Aufnahme
- 72: Einführschräge
- 331: Anbindungslasche
- 521: Einführschräge

## Patentansprüche

1. Fahrzeugdach, umfassend mindestens einen transparenten Dachabschnitt (11, 12), einen dachfesten Trägerabschnitt und eine Rolloanordnung (15) zur wahlweisen Abschattung oder zumindest teilweisen Freigabe des transparenten Dachabschnitts (11, 12), die mindestens eine Rolloeinheit (16, 17) aufweist, die eine Rollobahn (18, 19), die zu einem Rollowickel (20, 21) aufwickelbar ist, und bezogen auf die vertikale Dachlängsmittelebene beidseits jeweils ein seitliches Lagerelement (30) umfasst, wobei der Rollowickel (20, 21) zwischen den beiden seitlichen Lagerelementen (30) angeordnet ist, wobei die Rolloanordnung (15) eine Lagerschale (24) umfasst, auf der die mindestens eine Rolloeinheit (16, 17) über die seitlichen Lagerelemente (30) befestigt ist und die von unten an dem mindestens einen Trägerabschnitt fixiert ist, **dadurch gekennzeichnet, dass** die Lagerschale (24) für die seitlichen Lagerelemente (30) jeweils mindestens einen Positionierschlitz (61) aufweist, in den ein Positionierelement, insbesondere eine Positionierrippe (60) des jeweiligen Lagerelements (30) eingreift.

2. Fahrzeugdach nach Anspruch 1, **dadurch gekennzeichnet, dass** die Rolloeinheit (16, 17) in an dem dachfesten Trägerabschnitt fixierten Zustand der Lagerschale (24) bezüglich der Lagerschale (24) und dem Trägerabschnitt positionierbar ist.

3. Fahrzeugdach nach Anspruch 1 oder 2, **dadurch gekennzeichnet, dass** die Lagerelemente (30) jeweils einen Lagerzapfen (32) für ein Wickelrohr umfassen.

4. Fahrzeugdach nach einem der Ansprüche 1 bis 3, **dadurch gekennzeichnet, dass** die Lagerelemente (30) jeweils mindestens einen stirnseitigen Zentrierzapfen (53, 54, 55) umfassen, der in eine dachfeste Zentrierausnehmung eingreift.

5. Fahrzeugdach nach einem der Ansprüche 1 bis 4, **dadurch gekennzeichnet, dass** die Lagerelemente (30) jeweils zwei Seitenwände (47) aufweisen, zwischen denen von oben ein Profilabschnitt (52) eines Führungsschienenprofils (25A, 25B, 26A, 26B) aufgenommen ist und zwischen denen ein Lagerelementboden (48) ausgebildet ist, auf dem der Profilabschnitt (52) in der Montagestellung aufliegt, wobei die Seitenwände (47) und der Profilabschnitt (52) vorzugsweise jeweils mit einer Einführschräge (49, 521) versehen sind.

6. Fahrzeugdach nach einem der Ansprüche 1 bis 5, **dadurch gekennzeichnet, dass** die Lagerelemente (30) jeweils eine Führungsbahn (34) für einen Zugspriegelgleiter (33) haben, die mit einem Führungskanal (35) eines Führungsschienenprofils (25A, 25B, 26A, 26B) fluchtet.

7. Fahrzeugdach nach Anspruch 6, **dadurch gekennzeichnet, dass** die Zugspriegelgleiter (33) jeweils eine Aufnahme (71) für ein Koppelelement (70) eines jeweiligen Antriebskabels (39) aufweisen, das von einem Antriebsmotor (68) angetrieben ist.

8. Fahrzeugdach nach Anspruch 7, **dadurch gekennzeichnet, dass** die Aufnahme (71) nach oben offen ist und das Koppelelement (70) in Längsrichtung des betreffenden Führungsschienenprofils (25A, 25B, 26A, 26B) spielfrei aufnimmt.

9. Fahrzeugdach nach Anspruch 7 oder 8, **dadurch gekennzeichnet, dass** die Aufnahmen (71) jeweils Einführschrägen (72) für das jeweilige Koppelelement (70) haben.

10. Fahrzeugdach nach einem der Ansprüche 7 bis 9, **dadurch gekennzeichnet, dass** die Koppelelemente (70) der Antriebskabel (69) verdrehgesichert in den Führungsschienenprofilen (25A, 25B, 26A, 26B) geführt sind und jeweils eine Zunge umfassen, die in Richtung der vertikalen Dachlängsmittelebene weist.

11. Fahrzeugdach nach einem der Ansprüche 1 bis 10, **dadurch gekennzeichnet, dass** die Lagerschale (24) bezogen auf die vertikale Dachlängsmittelebene beidseits jeweils mit einem Fixierblech (28A, 28B) versehen ist, über das sie karosseriefest fixierbar ist.

12. Fahrzeugdach nach einem der Ansprüche 1 bis 11, **dadurch gekennzeichnet, dass** die Lagerschale (24) von unten mit Führungsschienenprofilen (25A, 25B, 26A, 26B) verschraubt ist, die den Trägerabschnitt bilden.

13. Fahrzeugdach nach Anspruch 12, **dadurch gekennzeichnet, dass** die Lagerelemente (30) von unten mit den Führungsschienenprofilen (25A, 25B, 26A, 26B) verschraubt sind.

14. Fahrzeugdach nach einem der Ansprüche 1 bis 13, **dadurch gekennzeichnet, dass** die Rolloanordnung (15) zwei Rolloeinheiten (16, 17) umfasst, die auf der Lagerschale (24) angeordnet sind.

15. Fahrzeugdach nach einem der Ansprüche 1 bis 14, **dadurch gekennzeichnet, dass** der Trägerabschnitt von einem Rahmen eines Dachöffnungssystems gebildet ist.

## Claims

1. Vehicle roof, comprising at least one transparent roof section (11, 12), a roof-fixed carrier section, and a roller blind arrangement (15) for selectively shading or at least partially releasing the transparent roof section (11, 12), which roller blind arrangement has at least one roller blind unit (16, 17) which comprises a roller blind web (18, 19), which can be wound up to form a roller blind coil (20, 21), and a respective lateral bearing element (30) on either side with respect to the vertical roof longitudinal centre plane, wherein the roller blind coil (20, 21) is arranged between the two lateral bearing elements (30), wherein the roller blind arrangement (15) comprises a bearing shell (24) on which the at least one roller blind unit (16, 17) is fastened via the lateral bearing elements (30) and which is fixed from below to the at least one carrier section, **characterized in that**, for each of the lateral bearing elements (30), the bearing shell (24) has at least one positioning slot (61) in which a positioning element, in particular a positioning rib (60) of the respective bearing element (30) engages.

2. Vehicle roof according to claim 1, **characterized in that** the roller blind unit (16, 17) can be positioned with respect to the bearing shell (24) and to the carrier section when the bearing shell (24) is in a state fixed to the roof-fixed carrier section.

3. Vehicle roof according to claim 1 or 2, **characterized in that** the bearing elements (30) each comprise a bearing pin (32) for a winding tube.

4. Vehicle roof according to one of claims 1 to 3, **characterized in that** the bearing elements (30) each comprise at least one end-side centring pin (53, 54, 55) which engages in a roof-fixed centring recess.

5. Vehicle roof according to one of claims 1 to 4, **characterized in that** the bearing elements (30) each have two side walls (47) between which a profile section (52) of a guide rail profile (25A, 25B, 26A, 26B) is received from above and between which a bearing element base (48) is formed, on which the profile section (52) rests in the installation position, wherein the side walls (47) and the profile section (52) are preferably each provided with an insertion slope (49, 521).

6. Vehicle roof according to one of claims 1 to 5, **characterized in that** the bearing elements (30) each have a guide track (34) for a pull bar slider (33), which guide track is aligned with a guide channel (35) of a guide rail profile (25A, 25B, 26A, 26B).

7. Vehicle roof according to claim 6, **characterized in that** the pull bar sliders (33) each have a receptacle (71) for a coupling element (70) of a respective drive cable (39) which is driven by a drive motor (68) .

8. Vehicle roof according to claim 7, **characterized in that** the receptacle (71) is open upwards and receives the coupling element (70) without play in the longitudinal direction of the relevant guide rail profile (25A, 25B, 26A, 26B).

9. Vehicle roof according to claim 7 or 8, **characterized in that** the receptacles (71) each have insertion slopes (72) for the respective coupling element (70).

10. Vehicle roof according to one of claims 7 to 9, **characterized in that** the coupling elements (70) of the drive cables (69) are guided in the guide rail profiles (25A, 25B, 26A, 26B) in a manner secured against twisting and each comprise a tongue which points in the direction of the vertical roof longitudinal centre plane.

11. Vehicle roof according to one of claims 1 to 10, **characterized in that** the bearing shell (24) is provided with a respective fixing plate (28A, 28B) on either side with respect to the vertical roof longitudinal centre plane, via which it can be fixed mounted on the body.

12. Vehicle roof according to one of claims 1 to 11, **characterized in that** the bearing shell (24) is screwed from below to guide rail profiles (25A, 25B, 26A, 26B) which form the carrier section.

13. Vehicle roof according to claim 12, **characterized in that** the bearing elements (30) are screwed from below to the guide rail profiles (25A, 25B, 26A, 26B) .

14. Vehicle roof according to one of claims 1 to 13, **characterized in that** the roller blind arrangement (15) comprises two roller blind units (16, 17) which are arranged on the bearing shell (24).

15. Vehicle roof according to one of claims 1 to 14, **characterized in that** the carrier section is formed by a frame of a roof opening system.

## Revendications

1. Toit de véhicule, comportant au moins une partie de toit transparente (11, 12), une partie de support solidaire du toit et un ensemble de store (15) servant à ombrager sélectivement ou à libérer au moins partiellement la partie de toit transparente (11, 12), lequel ensemble comprend au moins une unité de store (16, 17) qui comporte une bande de store (18, 19) qui peut être enroulée en un enroulement de store (20, 21) et respectivement un élément de palier latéral (30) des deux côtés par rapport au plan médian longitudinal vertical du toit, l'enroulement de store (20, 21) étant disposé entre les deux éléments de palier (30) latéraux, l'ensemble de store (15) comportant un coussinet de palier (24) sur lequel l'au moins une unité de store (16, 17) est fixée par le biais des éléments de palier (30) latéraux et qui est assujetti par le bas à l'au moins une partie de support, **caractérisé en ce que** le coussinet de palier (24) comprend, pour les éléments de palier (30) latéraux, respectivement au moins une fente de positionnement (61) dans laquelle vient en prise un élément de positionnement, en particulier une nervure de positionnement (60) de l'élément de palier (30) respectif.

2. Toit de véhicule selon la revendication 1, **caractérisé en ce que** l'unité de store (16, 17) peut être positionnée par rapport au coussinet de palier (24) et à la partie de support dans l'état du coussinet de palier (24) assujetti à la partie de support solidaire du toit.

3. Toit de véhicule selon la revendication 1 ou 2, **caractérisé en ce que** les éléments de palier (30) comportent respectivement un tourillon de palier (32)

4. Toit de véhicule selon l'une des revendications 1 à 3, **caractérisé en ce que** les éléments de palier (30) comportent respectivement au moins un tourillon de centrage (53, 54, 55) frontal qui vient en prise dans un

5. Toit de véhicule selon l'une des revendications 1 à 4, **caractérisé en ce que** les éléments de palier (30) comprennent respectivement deux parois latérales (47), entre lesquelles une partie (52) d'un profilé de rail de guidage (25A, 25B, 26A, 26B) est logée par le haut et entre lesquelles un fond d'élément de palier (48) est réalisé, sur lequel la partie de profilé (52) repose dans la position de montage, les parois latérales (47) et la partie de profilé (52) étant pourvues de préférence respectivement d'un biseau d'insertion (49, 521).

6. Toit de véhicule selon l'une des revendications 1 à 5, **caractérisé en ce que** les éléments de palier (30) ont respectivement une glissière de guidage (34) pour un coulisseau d'arceau de traction (33), laquelle est alignée sur un canal de guidage (35) d'un profilé de rail

7. Toit de véhicule selon la revendication 6, **caractérisé en ce que** les coulisseaux d'arceau de traction (33) comprennent respectivement un logement (71) pour un élément d'accouplement (70) d'un câble d'entraînement (39) respectif qui est entraîné par un

8. Toit de véhicule selon la revendication 7, **caractérisé en ce que** le logement (71) est ouvert vers le haut et loge l'élément d'accouplement (70) sans jeu dans la direction longitudinale du profilé de rail de

9. Toit de véhicule selon la revendication 7 ou 8, **caractérisé en ce que** les logements (71) ont respectivement des biseaux d'insertion (72) pour

10. Toit de véhicule selon l'une des revendications 7 à 9, **caractérisé en ce que** les éléments d'accouplement (70) du câble d'entraînement (69) sont guidés dans les profilés de rail de guidage (25A, 25B, 26A, 26B) de manière bloquée en rotation et comportent respectivement une languette qui est orientée en direction du plan

11. Toit de véhicule selon l'une des revendications 1 à 10, **caractérisé en ce que** le coussinet de palier (24) est pourvu respectivement d'une tôle d'assujettissement (28A, 28B) des deux côtés par rapport au plan médian longitudinal vertical du toit, par le biais de laquelle

12. Toit de véhicule selon l'une des revendications 1 à 11, **caractérisé en ce que** le coussinet de palier (24) est vissé par le bas sur des profilés de rail de guidage (25A, 25B, 26A, 26B) qui forment la partie de support.

13. Toit de véhicule selon la revendication 12, **caractérisé en ce que** les éléments de palier (30) sont vissés par le bas sur les profilés de rail de guidage

14. Toit de véhicule selon l'une des revendications 1 à 13, **caractérisé en ce que** l'ensemble de store (15) comporte deux unités de store (16, 17) qui sont disposées

15. Toit de véhicule selon l'une des revendications 1 à 14, **caractérisé en ce que** la partie de support est formée par un cadre d'un système d'ouverture de toit.
